# NEUE EUROPÄISCHE PATENTSCHRIFT

(11) **EP 0 470 518 B2**
(45) Veröffentlichungstag und Bekanntmachung des Hinweises auf die Entscheidung über den Einspruch: **31.05.2000**
(45) Hinweis auf die Patenterteilung: 04.05.1994
(21) Anmeldenummer: 91113016.9
(22) Anmeldetag: 02.08.1991
(51) Int. Cl.: B01J 19/12, C02F 1/32

(54) **Vorrichtung zur Durchführung photochemischer Reaktionen**
Device for carrying out photochemical reactions
Dispositif pour exécuter des réactions photochimiques

(30) Priorität: 08.08.1990 DE 4025078
(43) Veröffentlichungstag der Anmeldung: 12.02.1992
(73) Patentinhaber: ULTRA SYSTEMS GMBH UV-OXIDATION, D-69123 Heidelberg (DE)
(72) Erfinder: Massholder, Karl F., Dr., W-6917 Altneudorf (DE); Werz, Wilfried, W-6905 Schriesheim (DE)
(74) Vertreter: Werner, Hans-Karsten, Dr.Dipl.-Chem.

(56) Entgegenhaltungen:
- EP-A- 0 202 820
- FR-A- 930 466
- FR-A- 1 074 625
- US-A- 4 144 152
- US-A- 4 897 246
- J.Kiefer:"ultraviolette Strahlen", W.de Gruyter, Berlin, New York, 1977, Seiten 110-116, 364-365, 422-427, 638-639
- Prospekt "Tauchlampen für photochemische Labor- und Herstellungsverfahren" der Firma Heraeus (1983)
- Chem. Eng. Sci., 1977, Bd. 32, S. 89-96
- A.M.Braun u.a.: "Technologie Photochimique", 1986, S. 173-174

## Beschreibung

Gegenstand der vorliegenden Erfindung ist eine Vorrichtung zur Durchführung photochemischer Reaktionen zum Abbau organischer Substanzen, insbesondere aliphatischer, aromatischer und heterocyclischer Struktur, die gegebenenfalls ein- oder mehrfach halogeniert sind oder Stickstoff und Kohlenstoff im gleichen Molekül enthalten in flüssigen und/oder gasförmigen Strömen durch Bestrahlung mit UV-Licht bestehend aus Zu- und Ableitungen, einer oder mehrerer UV-Lampen sowie einem durchströmten Reaktionsgefäß, wobei das Reaktionsgefäß innen eine stark UV-Licht reflektierende Oberfläche aus poliertem Edelstahl besitzt und auf dieser oder vor dieser Oberfläche Vorrichtungen aufweist, die eine turbulente Strömung erzeugen.

Photochemische Reaktionen sind bisher vor allem bei Synthesen spezieller organischer Substanzen zum Einsatz gekommen. Aus der DE-PS 909 292 ist eine Vorrichtung bekannt zur Ultraviolett-Bestrahlung von Flüssigkeiten in Durchflußrohren, insbesondere von flüssigen Lebensmitteln aller Art, die mit UV-Licht entkeimt und mit Vitaminen angereichert werden sollen. Wegen der nur geringen Eindringtiefe der Ultraviolett-Strahlung war vorgesehen, daß die Flüssigkeiten in unmittelbarer Berührung mit der Ultraviolett-Strahlung mit turbulenter Strömung durch die Vorrichtung geleitet werden sollten. Dazu wurden Durchflußrohre vorgeschlagen, die einen sich längs der Durchflußrichtung ändernden Durchtrittsquerschnitt haben. Die Geräte mit wellenförmig zu-und abnehmendem Durchmesser sind schwierig herzustellen und noch schwieriger zu reinigen. Es ist deshalb verständlich, warum diese Geräte in der Praxis keinen Eingang gefunden haben.

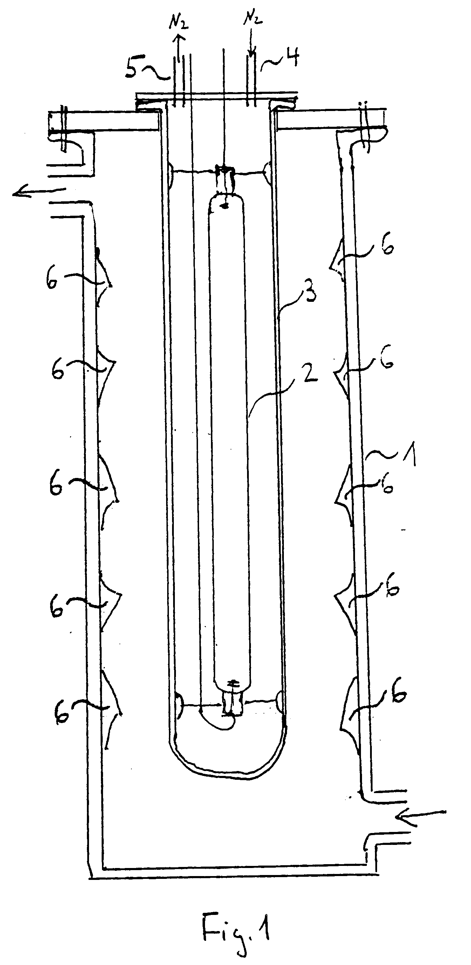

Die FR-A-1,074,625 beschreibt Apparate zur Strahlenbehandlung von Fluiden, welche aufgrund ihrer Ausgestaltung in den Figuren 1 bis 8 offensichtlich dafür gedacht sind, kleine Mengen von Flüssigkeiten zu behandeln und zu entkeimen. Dies ergibt sich zusätzlich aus Seite 5, linke Spalte, 1. Absatz, wo erwähnt ist, daß das zu behandelnde Fluid vorher einer thermischen Behandlung wie Pasteurisation unterworfen werden kann. Derartige Apparate weisen im allgemeinen nur eine Leistung von 0,5 bis 1 Watt/cm Länge der Lampe auf.

In der Zwischenzeit wird aber, insbesondere von der Anmelderin, davon Gebrauch gemacht, daß UV-Licht geeignet ist, organische Substanzen in flüssigen und/oder gasförmigen Strömen abzubauen, so daß man beispielsweise naturbelassene und kontaminierte Grundwässer, Industrieabwässer und Industrieabgase von Schadstoffen befreit.

Derartige Verfahren sind beispielsweise vorgeschlagen in den deutschen Patentanmeldungen 39 03 549.2 und 40 16 514.0.

Herkömmliche Vorrichtungen zur Durchführung photochemischer Reaktionen bestehen im allgemeinen aus Zu- und Ableitungen, einer oder mehreren UV-Lampen sowie einem durchströmten Reaktionsgefäß.

Ein generelles Problem aller photochemischen Reaktion, insbesondere mit UV-Licht, besteht darin, daß die Absorption des UV-Lichts im Reaktionsmedium dem Lambert-Beerschen Gesetz unterliegt und daher in starkem Maße von dem jeweiligen Extinktionskoeffizienten des Reaktionsgemisches bei den verschiedenen Wellenlängen des eingestrahlten Lichtes abhängt. Bei hohen Extinktionskoeffizienten und hohen Konzentrationen kann das UV-Licht nur eine relativ kurze Wegstrecke durchdringen. Bei niedrigen Extinktionskoeffizienten und niedrigen Konzentrationen wird das Licht nicht absorbiert und daher ungenutzt nach außen abgestrahlt. Während bei gezielten Synthesen organischer Substanzen die Dimensionierung der Vorrichtung, die Konzentration der umzusetzenden Ausgangsprodukten und die Durchflußgeschwindigkeit durch Vorversuche aufeinander abstimmt werden können, ist dies beim Abbau organischer Substanzen wesentlich schwieriger. Dies gilt sowohl bezüglich der Absorptionspektren der abzubauenden Substanzen als auch bezüglich der Konzentration dieser Verunreinigungen. Dennoch ist es für die Wirtschaftlichkeit und Zuverlässigkeit des Verfahrens außerordentlich wichtig, daß eine möglichst hohe Lichtquantenausbeute erreicht wird und die abzubauenden Produkte zuverlässig in dem gewünschten Maße auch tatsächlich abgebaut werden.

Dies wird dadurch erreicht, daß das Reaktionsgefäß innen eine stark UV-Licht reflektierende Oberfläche aus poliertem Edelstahl besitzt und auf dieser oder vor dieser Oberfläche Vorrichtungen aufweist, die eine turbulente Strömung erzeugen.

Die turbulente Strömung sorgt bei stark absorbierenden flüssigen und/oder gasförmigen Strömen für das Heranführen des abzubauenden Materials in den Bereich intensiver Bestrahlung, d. h. in die Nähe der UV-Lampe. Die stark UV-Licht reflektierende Oberfläche aus poliertem Edelstahl des Reaktionsgefäßes wiederum sorgt dafür, daß nicht-absorbiertes UV-Licht in das Reaktionsgefäß zurückgeführt wird und dort erneut wirksam werden kann.

Durch diese Ausgestaltung des Reaktionsgefäßes ist es möglich, im vorderen Teil des Reaktionsgefäßes auch höhere Konzentrationen der abzubauenden Stoffe rasch und wirksam abzubauen und im hinteren Teil des Reaktionsgefäßes dafür zu sorgen, daß auch die noch verbliebenen Reste einer so intensiven Bestrahlung ausgesetzt werden, daß eine ausreichende Absorption und ein ausreichender Abbau erfolgen können.

Das Reaktionsgefäß besteht daher aus einem längerem Edelstahlrohr, welches innen poliert ist und auf seiner Innenwand oder davor Strombrecher aufweist. Um organische Verbindungen abzubauen, sind wesentlich höhere Energiemengen nötig als für die Sterilisation. Es ist daher nötig, entsprechend hohe Lichtmengen auf engem Raum zur Verfügung zu stellen, ohne daß das zu bestrahlende Material unnötig aufgeheizt wird. Diese Aufgabe wurde jetzt dadurch gelöst, daß die UV-Lampen als Tauchlampen ausgebildet sind und sich zwischen dem Tauchrohr und der UV-Lampe eine Schicht inertes, UV-durchlässiges Gas befindet, und daß die UV-Lampen eine Leistung von mindestens 100 Watt/cm Länge der Tauchlampe erbringen.

Es werden somit in das Reaktionsgefäß eine oder mehrere UV-Tauchlampen eingesetzt, die eine möglichst hohe Leistung erbringen. Die Leistung beträgt mindestens 100 Watt/cm. Länge der Tauchlampe.

Prinzipiell können zwar auch Niederdrucklampen verwendet werden, besonders effizient wirken aber Mitteldruck- und vor allem Hochdrucklampen. Es ist bekannt, daß man das Spektrum derartiger UV-Lampen durch Dotierung mit speziellen Metallsalzen auf wenige enge Teilbereiche beschränken kann. Dies ist sicherlich sinnvoll bei der Synthese spezieller organischer Substanzen. Es kann auch dann sinnvoll sein, wenn aus dem zu reinigenden Wasser oder Gas nur eine bestimmte Substanz mit einem bestimmten Absorptionsspektrum entfernt werden soll. Liegen hingegen Gemische von Verunreinigungen vor, so ist es vorzuziehen, undotierte UV-Lampen einzusetzen, die ein breites Spektrum abstrahlen und daher auch den verschiedensten Substanzen die Möglichkeit geben, dieses Licht gut zu absorbieren und dadurch abgebaut zu werden.

Die Absorption des UV-Lichtes von den abzubauenden organischen Substanzen verläuft außerordentlich schnell, während die nachfolgenden Abbaureaktionen etwas mehr Zeit benötigen können. Vorzugsweise werden daher für das erfindungsgemäße Verfahren längere Edelstahlrohre verwendet, in die gegebenenfalls von beiden Enden her Tauchlampen eingesetzt werden.

Es ist weiterhin notwendig, UV-Lampen zu verwenden, bei denen sich zwischen dem Tauchrohr und der UV-Lampe eine Schicht inertes, UV-durchlässiges Gas befindet. Besonders bewährt hat sich 5.0-Stickstoff, der eine Reinheit von 99,999% aufweist. Von diesem Gas kann man einen leichten Strom durch den Zwischenraum hindurchleiten und das abströmende Gas ohne weitere Reinigung abströmen lassen. Die Anwesenheit von Sauerstoff in diesem Gas führt nicht nur zu Absorptionsverlusten, sondern vor allem zur Bildung von Ozon und Stickoxiden, die zumindest nicht in geschlossenen Räumen abgelassen werden sollten.

Selbstverständlich ist es möglich, in den Zu- und/oder Ableitungen und/oder Teilen der inneren Oberfläche des Reaktionsgefäßes feste Katalysatoren einzubringen, die den Abbauprozeß verstärken und optimieren. Gegebenenfalls können diese Festbettkatalysatoren auch Nachreaktionen auslösen oder beschleunigen und dadurch das Gesamtergebnis deutlich verbessern.

Schließlich kann die erfindungsgemäße Vorrichtung an der Zuleitung die Zuführungsmöglichkeit für Hilfschemikalien aufweisen, die in einigen Fällen zu einer weiteren Verbesserung der Ergebnisse führen. Zu derartigen Hilfschemikalien zählen insbesondere H₂O₂ und O₂, die organischen Kohlenstoff zu CO₂ oxidieren. Auch die stark UV-Licht absorbierenden Huminsäuren werden so abgebaut. Ameisensäure, Ammoniak, Harnstoff und Aminderivate, wie Amidosulfonsäure, unterstützen die Zerstörung von Nitrat und Nitrit. Beide weisen hohe Extinktions-Koeffizienten auf für UV-Licht. Durch die chemische Zerstörung von Nitrat und Nitrit steht mehr UV-Licht für den Abbau der sonstigen Schadstoffe zur Verfügung. Für den Abbau von Verbindungen, die Stickstoff und Kohlenstoff im gleichen Molekül enthalten, insbesondere von Cyaniden und komplexen Cyaniden, dient vor allem H₂O₂ bei hohen pH-Werten von ca. 9. Auch beim Abbau halogenierter Kohlenwasserstoffe kann der Zusatz von H₂O₂ katalytisch wirken. Es ist prinzipiell möglich, die zu reinigenden Gase oder Wasserströme bei sehr starker Belastung im Kreislauf zu fahren und erst nach mehrfachem Durchgang durch die erfindungsgemäße Vorrichtung abzuleiten. Die erfindungsgemäße Vorrichtung ermöglicht durch die Kombination von Maßnahmen den raschen und zuverlässigen Abbau in einem breiten Konzentrationsbereich der abzubauenden Verunreinigungen bereits meist in einem Durchlauf.

Selbstverständlich läßt sich die erfindungsgemäße Vorrichtung in üblicher Weise mit analytischen Geräten, Kontrollschreibern, automatischer Abschaltung bei Ausfall der Tauchlampen etc. kombinieren. Es ist sogar möglich, die gesamte Vorrichtung wegen ihres relativ geringen Gewichts fahrbar auszugestalten und daher leicht zum Ort des Einsatzes zu transportieren. Größere Einheiten können in Containern montiert werden und somit wiederum als Ganzes an den Ort des Einsatz transportiert werden.

Die Menge des pro Zeiteinheit zu reinigenden Gases oder Wassers hängt in starkem Maße von dem Grad der Verunreinigung ab. Durchflußmengen bis zu 30 m³ pro Stunde sind bereits erzielt worden in einem Gerät mit einer handelsüblichen Tauchlampe von ca. 110 cm Länge.

Eine typische Ausführungsform der erfindungsgemäßen Vorrichtung ist in der nachfolgenden Figur 1 näher erläutert. Hierin bedeuten
1 das Reaktionsgefäß
2 eine UV-Lampe
3 die Außenwand des Tauchrohres
4 die Zuleitung für Stickstoff
5 die Ableitung für Stickstoff
6 Strombrecher

Das zu behandelnde flüssige oder gasförmige Material wird von unten in das Reaktionsgefäß (1) eingeleitet und tritt oben wieder aus. Es wird durch die Strombrecher (6) auf dem Weg durch das Reaktionsgefäß turbulent gemischt. Die Innenfläche des Reaktionsgefäßes besteht aus poliertem Edelstahl und ist daher in der Lage UV-Licht stark zu reflektieren.

Die Vorrichtung gemäß Figur 1 ist nicht maßstabsgerecht. Vorzugsweise sind die Vorrichtungen länger ausgebildet, um einen möglichst langen Weg des zu behandelnden Materials und damit eine relativ lange Einwirkungszeit im Reaktionsgefäß zu gewährleisten. Weiterhin können die Strombrecher auch als loser Einsatz in die Nähe der Oberfläche des Reaktionsgefäßes gebracht werden. Diese Ausführungsform hat den Vorteil, leichter gereinigt werden zu können.

## Patentansprüche

1. Vorrichtung zur Durchführung photochemischer Reaktionen zum Abbau organischer Substanzen, insbesondere aliphatischer, aromatischer und heterocyclischer Struktur, die gegebenenfalls ein- oder mehrfach halogeniert sind oder Stickstoff und Kohlenstoff im gleichen Molekül enthalten in flüssigen und/oder gasförmigen Strömen durch Bestrahlung mit UV-Licht bestehend aus Zu- und Ableitungen, einer oder mehrerer UV-Lampen sowie einem durchströmten Reaktionsgefäß, wobei das Reaktionsgefäß innen eine stark UV-Licht reflektierende Oberfläche aus poliertem Edelstahl besitzt und auf dieser oder vor dieser Oberfläche Vorrichtungen aufweist, die eine turbulente Strömung erzeugen, wobei die UV-Lampen als Tauchlampen ausgebildet sind und sich zwischen dem Tauchrohr und der UV-Lampe eine Schicht inertes, UV-durchlässiges Gas befindet, und die UV-Lampen eine Leistung von mindestens 100 Watt/cm Länge der Tauchlampe erbringen.

2. Vorrichtung gemäß einem der Ansprüche 1 dadurch gekennzeichnet, daß die Vorrichtungen zur Erzeugung turbulenter Strömungen Strombrecher sind.

3. Vorrichtung gemäß einem der Ansprüche 1 oder 2, dadurch gekennzeichnet, daß als Gas 5.0-Stickstoff (Reinheit 99,999%) verwendet wird.

4. Vorrichtung gemäß einem der Ansprüche 1 bis 3, dadurch gekennzeichnet, daß in den Zu- und/oder Ableitungen und/oder Teilen der inneren Oberfläche des Reaktionsgefäßes Festbett-Katalysatoren vorhanden sind.

5. Vorrichtung gemäß einem der Ansprüche 1 bis 4, dadurch gekennzeichnet, daß die UV-Lampen Mitteldruck- oder Hochdrucklampen sind.

6. Vorrichtung gemäß einem der Ansprüche 1 bis 5, dadurch gekennzeichnet, daß die Zu- und Ableitungen so ausgestaltet sind, daß sie das Fahren im Kreislauf gestatten.

## Claims

1. A device for carrying out photochemical reactions for the degradation of organic substances, in particular, of aliphatic, aromatic and heterocyclic structure, which optionally are mono- or polyhalogenated or contain nitrogen and carbon in the same molecule, contained in liquid and/or gaseous streams, by irradiation with UV light, consisting of inlets and outlets, one or more UV lamps and a flow-through reaction vessel, the reaction vessel having inside a surface of polished stainless steel which is highly reflective for UV light, and having means on or before this surface to generate turbulent flow, wherein the UV lamps are designed as immersion lamps, and that between immersion tube and UV lamp, there is a layer of inert, UV-transmittant gas, and the UV lamps provide a power of at least 100 W per cm length of the immersion lamp.

2. The device according to claim 1, characterized in that the means for generating turbulent flow are baffles.

3. The device according to any of claims 1 or 2, characterized in that Nitrogen 5.0 (99.999% purity) is employed as the gas.

4. The device according to any of claims 1 to 3, characterized in that fixed-bed catalysts are present in the inlets and/or outlets and/or portions of the inner surfaces of the reaction vessel.

5. The device according to any of claims 1 to 4, characterized in that the UV lamps are medium pressure or high pressure lamps.

6. The device according to any of claims 1 to 5, characterized in that the inlets and outlets are designed to permit recirculatory operation.

## Revendications

1. Dispositif pour réaliser des réactions photochimiques destinées à décomposer des substances organiques, en particulier de structure aliphatique, aromatique et hétérocyclique, qui le cas échéant sont mono ou poly-halogénées, ou qui contiennent de l'azote et du carbone dans la même molécule, en flux liquides et/ou gazeux, par exposition à la lumière ultraviolette, ce dispositif étant constitué de lignes d'arrivée et d'évacuation, d'une ou de plusieurs lampes UV, ainsi que d'un réacteur parcouru par le flux, le réacteur possédant à l'intérieur une surface en acier inoxydable poli réfléchissant à un degré élevé la lumière ultra-violette et présentant sur cette surface ou devant cette surface des dispositifs qui créent un écoulement turbulent, les lampes UV étant conformées comme des lampes immergées, une couche de gaz inerte perméable aux rayons ultraviolets se trouvant entre le tube immergé et la lampe ultra-violette, et les lampes UV développant une puissance d'au moins 100 Watt/cm de longueur de la lampe immergée.

2. Dispositif selon la revendication 1, caractérisé en ce que les dispositifs destinés à créer des écoulements turbulents sont des chicanes.

3. Dispositif selon l'une des revendications 1 ou 2, caractérisé en ce que le gaz utilisé est de l'azote 5.0 (pur à 99,999 %).

4. Dispositif selon l'une des revendications 1 à 3, caractérisé en ce que des catalyseurs en lit fixe existent dans les lignes d'arrivée et/ou d'évacuation et/ou des parties de la surface intérieure du réacteur.

5. Dispositif selon l'une des revendications 1 à 4, caractérisé en ce que les lampes UV sont des lampes à pression moyenne ou à haute pression.

6. Dispositif selon l'une des revendications 1 à 5, caractérisé en ce que les lignes d'arrivée ou d'évacuation sont conçues de manière telle qu'elles permettent la circulation en circuit fermé.
